# EUROPEAN PATENT SPECIFICATION

(11) **EP 4 221 151 B1**
(45) Date of publication and mention of the grant of the patent: **30.07.2025**
(21) Application number: 21882025.6
(22) Date of filing: 20.10.2021
(51) Int. Cl.: H04L 61/50, H04L 61/5014

(54) **IP ADDRESS ALLOCATION METHOD, APPARATUS AND SYSTEM**
IP-ADRESSENZUWEISUNGSVERFAHREN, -VORRICHTUNG UND -SYSTEM
PROCÉDÉ, APPAREIL ET SYSTÈME D'ATTRIBUTION D'ADRESSES IP

(30) Priority: 20.10.2020 CN 202011126173
(43) Date of publication of application: 02.08.2023
(73) Proprietor: Huawei Technologies Co., Ltd., Shenzhen, Guangdong 518129 (CN)
(72) Inventor: LIU, Jing, Shenzhen, Guangdong 518129 (CN); JIANG, Zhe, Shenzhen, Guangdong 518129 (CN)
(74) Representative: Gill Jennings & Every LLP
(86) International application number: PCT/CN2021/124851
(87) International publication number: WO 2022/083610

(56) References cited:
- CN-A- 101 110 817
- CN-A- 101 710 906
- CN-A- 102 340 546
- CN-A- 102 957 758
- CN-A- 105 763 671
- US-A1- 2014 355 609
- US-B1- 9 438 475
- DROMS R ET AL: "Dynamic Host Configuration Protocol for IPv6 (DHCPv6); rfc3315.txt", DYNAMIC HOST CONFIGURATION PROTOCOL FOR IPV6 (DHCPV6)?; RFC3315.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 July 2003 (2003-07-01), XP015009185
- VARADA S ET AL: "IP Version 6 over PPP; rfc5072.txt", IP VERSION 6 OVER PPP; RFC5072.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 September 2007 (2007-09-01), XP015055144
- ANONYMOUS: "Inserting the DHCPv6 Interface Identifier into DHCPv6 Packets - Technical Documentation - Support - Juniper Networks", 21 April 2016 (2016-04-21), pages 1 - 1, XP093116477, Retrieved from the Internet <URL:https://www.juniper.net/documentation/en_US/junos/topics/task/configuration/insert-dhcpv6-option-18-acx-series.html> [retrieved on 20240108]
- MOTOROLA: "IPv6 address autoconfiguration optimization", 3GPP DRAFT; S2-011466, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Puerto Rico; 20010521, 21 May 2001 (2001-05-21), Mobile Competence Centre ; 650, route des Lucioles ; F-06921 Sophia-Antipolis Cedex ; France , XP050235358

## Description

This application claims priority to Chinese Patent Application No. 202011126173.X, filed on October 20, 2020 and entitled "IP ADDRESS ALLOCATION METHOD AND APPARATUS, AND SYSTEM".

### TECHNICAL FIELD

This application relates to the field of communication technologies, and in particular, to an IP address allocation method and apparatus, and a system.

### BACKGROUND

In a point-to-point protocol over Ethernet (point-to-point protocol over Ethernet, PPPoE) access scenario, an address allocation device may use a neighbor discovery (neighbor discovery, ND) protocol to allocate an address prefix of an Internet protocol version 6 (Internet Protocol version 6, IPv6) address or use a dynamic host configuration protocol version 6 (Dynamic Host Configuration Protocol version 6, DHCPv6) protocol to allocate a 128-bit IPv6 address. When the address allocation device allocates an address prefix to an address request device by using the ND protocol, the address request device may generate an IPv6 address based on a pre-negotiated interface identifier and the address prefix. When the address allocation device allocates an IPv6 address to the address request device by using the DHCPv6 protocol, the address allocation device directly allocates a 128-bit IPv6 address to the address request device, regardless of the negotiated interface identifier.

However, in some application scenarios, an interface identifier of an IPv6 address allocated for an address request needs to be the negotiated interface identifier. When the address allocation device cannot perceive the interface identifier, the IPv6 address can only be randomly allocated. As a result, the address request device cannot access a network.

US 2014/355609 A1 discloses a method for prefix delegation to a customer premises equipment (CPE) device in a network system. The method includes receiving a dynamic host configuration protocol (DHCP) request that is generated at the CPE device. The address request can include an interface identifier associated with a network topology of the CPE device. The method also includes delegating a prefix for the CPE device in response to the address request, the delegated prefix corresponding to a subnet assignment for the CPE device based on the interface identifier in the address request. The method further includes transmitting the prefix to the CPE device in a response packet, and setting a route aggregation scheme for data routed to the endpoint device based on the delegated prefix.

DROMS R ET AL, "Dynamic Host Configuration Protocol for IPv6 (DHCPv6); rfc3315.txt", DYNAMIC HOST CONFIGURATION PROTOCOL FOR IPV6 (DHCPV6); RFC3315.TXT, INTERNET ENGINEERING TASK FORCE, IETF; STANDARD, INTERNET SOCIETY (ISOC) 4, RUE DES FALAISES CH-1205 GENEVA, SWITZERLAND, (20030701), XP015009185 provides information about the Dynamic Host Configuration Protocol (DHCP) for IPv6. DHCP enables DHCP servers to pass configuration parameters such as IPv6 network addresses to IPv6 nodes. It offers the capability of automatic allocation of reusable network addresses and additional configuration flexibility.

### SUMMARY

Embodiments of this application provide an IP address allocation method and apparatus, and a system, to resolve a problem that an address request device cannot normally access a network.

According to a first aspect of embodiments of this application, an IP address allocation method according to appended claim 1 is provided.

In a possible implementation, that the relay device adds an interface identifier to the request packet, and forwards the request packet including the interface identifier to an address allocation device includes: The relay device encapsulates the request packet into a relay-forward packet, where the interface identifier is carried in the relay-forward packet; and the relay device forwards the relay-forward packet including the interface identifier to the address allocation device. In this implementation, the relay device adds the interface identifier to the relay-forward packet, so that the address allocation device can obtain the interface identifier by parsing the relay-forward packet.

In a possible implementation, an address allocation protocol used by the address allocation device and the address request device is a dynamic host configuration protocol DHCPv6.

In a possible implementation, the relay-forward packet is a DHCPv6 solicit relay-forward packet, and the interface identifier is carried in a newly added option field of the DHCPv6 solicit relay-forward packet.

In a possible implementation, the address request device is a point-to-point protocol over Ethernet PPPoE device.

In a possible implementation, the address allocation device is a dynamic host configuration protocol DHCPv6 server, and the relay device is a DHCP relay device.

According to a second aspect of embodiments of this application, an IP address allocation method according to appended claim 7 is provided.

In a possible implementation, the interface identifier is added to the request packet by the address request device. In this implementation, when generating the request packet, the address request device may directly add the interface identifier to the request packet.

In a possible implementation, the interface identifier is added to the request packet by the relay device. In this implementation, when the relay device receives the request packet sent by the address request device, if the request packet does not carry the interface identifier, the relay device adds the interface identifier to the request packet.

In a possible implementation, the interface identifier is carried in a newly added option field of the request packet. In this implementation, the interface identifier may be added to the newly added option field in the request packet, to carry the interface identifier by using the option field.

In a possible implementation, that the address allocation device allocates the IPv6 address based on the interface identifier includes: The address allocation device obtains an address prefix; and the address allocation device generates the IPv6 address based on the address prefix and the interface identifier. After receiving the request packet, the address allocation device may obtain the interface identifier by parsing the request packet. The address allocation device selects the address prefix from a corresponding IPv6 address pool, and then obtains the IPv6 address by combining the address prefix with the interface identifier.

According to a third aspect of embodiments of this application, an IP address allocation method according to appended claim 9 is provided.

In a possible implementation, that the address request device receives a response packet sent by the address allocation device includes: The address request device receives the response packet forwarded by the relay device.

In a possible implementation, the request packet is a DHCPv6 solicit packet, and the interface identifier is carried in a newly added option field of the DHCPv6 solicit packet.

According to a fourth aspect of embodiments of this application, a communication device according to appended claim 12 is provided.

According to a fifth aspect of embodiments of this application, a communication system according to appended claim 13 is provided.

According to a sixth aspect of embodiments of this application, a computer-readable storage medium according to appended claim 14 is provided.

According to a seventh aspect of embodiments of this application, a computer-readable storage medium according to appended claim 15 is provided.

According to the method provided in embodiments of this application, there is a relay device between an address request device and an address allocation device, and the address request device requests an IPv6 address, a request packet sent by the address request device to the address allocation device includes an interface identifier negotiated with the relay device. After receiving the request packet, the address allocation device allocates the IPv6 address based on the interface identifier in the request packet, where the IPv6 address includes the interface identifier; and sends the IPv6 address to the address request device by using a response packet, so that the address request device uses the IPv6 address to access a network. It can be learned that in embodiments of this application, the negotiated interface identifier is sent to the address allocation device, so that when the address allocation device allocates the IPv6 address, the allocated IPv6 address is related to the negotiated interface identifier, to ensure that the address request device can successfully access the network.

### BRIEF DESCRIPTION OF DRAWINGS

To describe the technical solutions in embodiments of this application or in the conventional technology more clearly, the following briefly describes the accompanying drawings for describing embodiments or the conventional technology. It is clear that the accompanying drawings in the following description show some embodiments recorded in this application, and a person of ordinary skill in the art may still derive other drawings from these accompanying drawings without creative efforts.
FIG. 1 is a schematic diagram of an application scenario according to an embodiment of this application;
FIG. 2 is a flowchart of an IP address allocation method according to an embodiment of this application;
FIG. 3a is a schematic diagram of a structure of an option field according to an embodiment of this application;
FIG. 3b is a schematic diagram of a structure of another option field according to an embodiment of this application;
FIG. 4 is a schematic diagram of another application scenario according to an embodiment of this application;
FIG. 5 is a diagram of a structure of an IP address allocation apparatus according to an embodiment of this application;
FIG. 6 is a diagram of a structure of another IP address allocation apparatus according to an embodiment of this application;
FIG. 7 is a diagram of a structure of another IP address allocation apparatus according to an embodiment of this application;
FIG. 8 is a diagram of a structure of a communication device according to an embodiment of this application; and
FIG. 9 is a diagram of a structure of another communication device according to an embodiment of this application.

### DESCRIPTION OF EMBODIMENTS

To make a person skilled in the art better understand the solutions in the present invention, the following clearly and completely describes the technical solutions in embodiments of the present invention with reference to the accompanying drawings in embodiments of the present invention. It is clear that the described embodiments are merely some but not all of the embodiments of the present invention.

For ease of understanding specific implementations of embodiments of this application, the following first describes technologies and network elements in embodiments of this application.

Currently, relatively common authentication technologies mainly include an IP over Ethernet (IPoE) and a PPP over Ethernet (point-to-point protocol over Ethernet, PPPoE). In a PPPoE access scenario, user equipment obtains, through negotiation with an address allocation device, an IP address used for accessing a network. A PPPoE negotiation process includes two phases: PPPoE negotiation (a discovery phase) and PPP negotiation (a session phase). The PPPoE negotiation phase includes determining an Ethernet MAC address of the address allocation device and a session ID allocated by the address allocation device to the user equipment for PPPoE access, to uniquely identify a PPPoE virtual link between the user equipment and the address allocation device. The PPP negotiation includes a link control protocol (link control protocol, LCP) negotiation phase, an authentication phase, and a network control protocol (network control protocol, NCP) negotiation phase.

A main function of NCP negotiation is to negotiate a network-layer parameter of a PPP packet. Common negotiation protocols in this negotiation phase include an IP control protocol (IP Control Protocol, IPCP) and an IPv6 control protocol (IPv6 Control Protocol, IPv6CP). The IPCP is used to negotiate an IPv4 address, and the IPv6CP is used to negotiate an interface identifier (identity, ID) and an IPv6 address. Specifically, the user equipment and the address allocation device first negotiate to obtain the interface ID (usually last 64 bits of the IPv6 address), and the address allocation device may allocate a prefix (usually first 64 bits of the IPv6 address) to an address request device by using a neighbor discovery (neighbor discovery, ND) protocol. The user equipment forms a 128-bit IPv6 address based on the prefix and the interface ID. Alternatively, the address allocation device directly allocates the 128-bit IPv6 address to the user equipment by using a DHCPv6 protocol. It should be noted that, when the address allocation device allocates the IPv6 address to the user equipment by using the DHCPv6 protocol, the address allocation device may pre-configure that an address interface ID in the allocated IPv6 address is the same as the negotiated interface ID, or allocates the IPv6 address randomly without being limited by the interface ID.

However, in some application scenarios, the address interface ID in the IPv6 address allocated to the user equipment needs to be the same as the negotiated interface ID. For example, the Windows operating system requires that the address interface ID of the allocated IPv6 address needs to be the negotiated interface ID. When a relay device exists between the user equipment and the address allocation device, the user equipment usually negotiates the interface ID with the relay device. As a result, when allocating the IPv6 address by using the DHCPv6 protocol, the address allocation device cannot perceive the negotiated interface ID, and can only randomly allocate the IPv6 address. In this case, the user device cannot identify the IPv6 address, causing a network access problem.

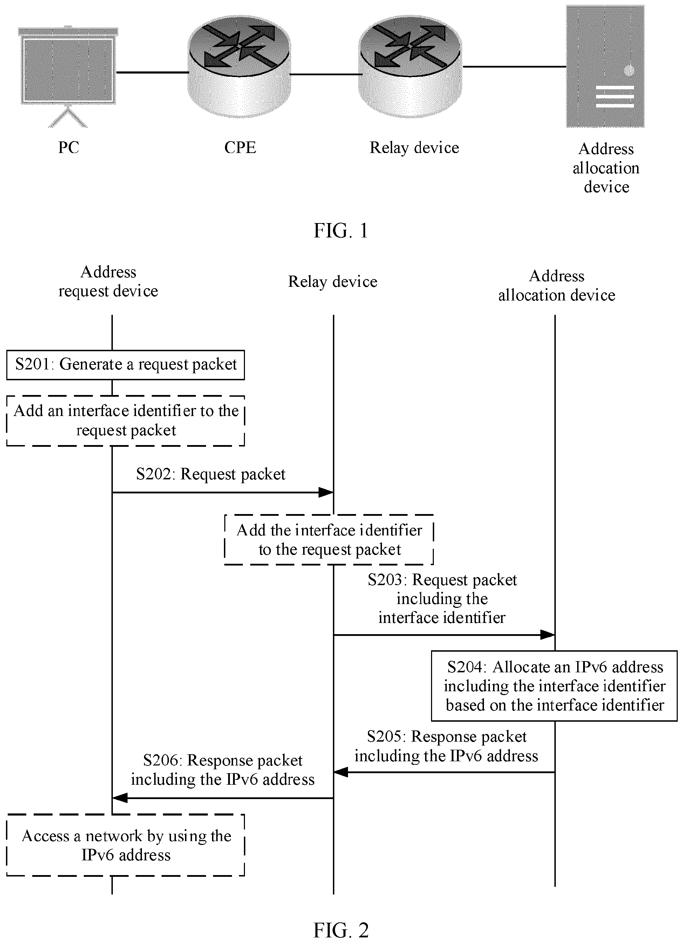

For ease of understanding, refer to an application scenario diagram shown in FIG. 1. An example in which four network devices are included in a network system is used for description. The network devices are respectively a personal computer (personal computer, PC), customer-premises equipment (customer-premises equipment, CPE), a relay device, and an address allocation device. An address request device may be the PC or CPE, the address allocation device may be a DHCPv6 server, and the relay device may be a DHCPv6 relay device, for example, a broadband remote access server (broadband remote access server, BRAS). The relay device may serve as a local server to allocate an IPv6 address to the user equipment PC, or may relay a request packet sent by the address request device to the address allocation device, and the address allocation device allocates an IP address. Generally, when a relay device exists in the network system, the address request device negotiates an interface ID with a nearest relay device. When a DHCPv6 protocol is configured on the relay device to allocate an IPv6 address to the address request device, the negotiated interface ID may be used as an address interface ID in the IPv6 address, to ensure that the address request device can access a network normally. When the address allocation device allocates the IPv6 address to the address request device, because the address allocation device cannot learn the negotiated interface ID, the allocated IPv6 address cannot be identified.

Based on this, embodiments of this application provide an IP address allocation method. A relay device exists between an address request device and an address allocation device, and the address request device requests an IPv6 address, a request packet received by the address allocation device includes an interface identifier negotiated by the address request device and the relay device. When allocating the IPv6 address, the address allocation device may determine the IPv6 address based on the interface identifier, so that the allocated IPv6 address includes the interface identifier. In addition, a response packet including the IPv6 address is sent to the address request device, so that the address request device may access a network by using the IPv6 address.

For ease of understanding, the following describes network elements in a DHCPv6 protocol architecture.

A DHCPv6 client, for example, an address request device in this application, interacts with a DHCPv6 server, to obtain an IPv6 address/prefix and network configuration information and complete an address configuration function of the DHCPv6 client.

A DHCPv6 relay agent, for example, a relay device in this application, is responsible for forwarding a DHCPv6 packet from a direction of a client or a direction of a server, and assisting the DHCPv6 client and the DHCPv6 server in completing the address configuration function. Generally, the DHCPv6 client communicates with the DHCPv6 server by using a local link multicast address to obtain the IPv6 address/prefix and another network configuration parameter. If the server and the client are on different links, the DHCPv6 relay agent is required for packet forwarding. In this way, the DHCPv6 server does not need to be deployed on each link, thereby reducing costs and facilitating centralized management.

In the DHCPv6 protocol architecture, the DHCPv6 relay agent is not mandatory. If the DHCPv6 client and the DHCPv6 server are on a same link, or the DHCPv6 client and the DHCPv6 server directly communicate with each other in unicast mode to complete address allocation or information configuration, the DHCPv6 relay agent is not required. The DHCPv6 relay agent is required only when the DHCPv6 client and the DHCPv6 server are not on the same link or the DHCPv6 client and the DHCPv6 server cannot communicate with each other in unicast mode.

The DHCPv6 server, for example, an address allocation device in this application, is responsible for processing requests such as address allocation, address lease renewal, and address release from the client or the relay agent, and allocating an IPv6 address/prefix and other network configuration information to the client.

For ease of understanding specific implementations of embodiments of this application, the following provides description with reference to the accompanying drawings.

FIG. 2 is a flowchart of an IP address allocation method according to an embodiment of this application. As shown in FIG. 2, the method includes the following steps.

S201: An address request device generates a request packet.

In embodiments of the invention, after the address request device and a relay device complete interface identifier negotiation, the address request device generates the request packet, to request an IPv6 address by using the request packet. In other words, before the address request device requests the IPv6 address, the address request device first negotiates an interface identifier with the relay device, and requests the IPv6 address after the negotiation succeeds.

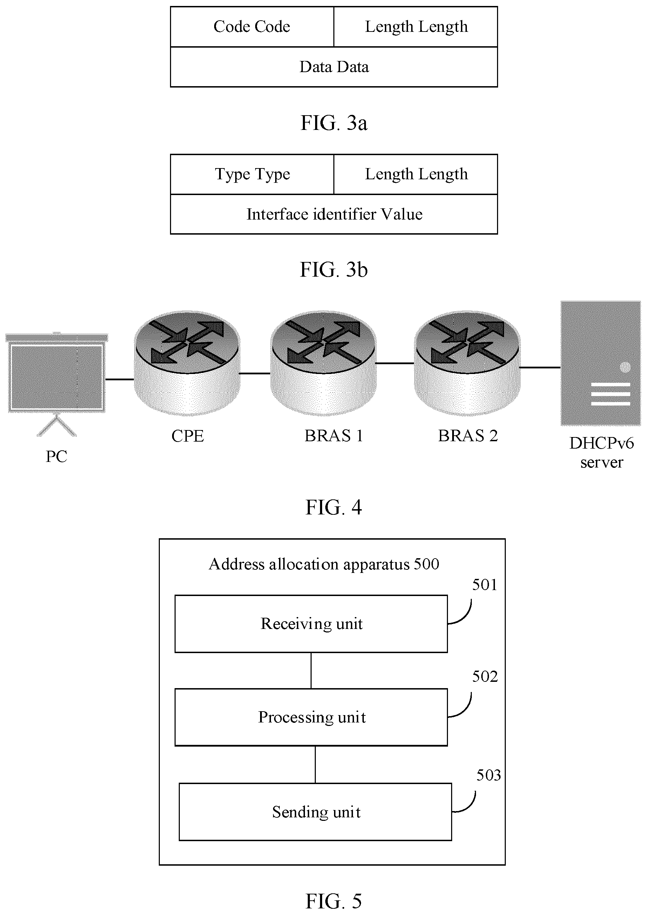

When a plurality of relay devices exist between the address request device and an address allocation device, the address request device negotiates an interface identifier with a nearest relay device. To be specific, the address request device negotiates the interface identifier with a first-hop relay device, and the address request device and the first-hop relay are located on a same link. For example, FIG. 4 is a schematic diagram of an application scenario. In the application scenario, a network system includes an address request device PC, customer-premises equipment CPE, a first relay device BRAS 1, a second relay device BRAS 2, and an address allocation device DHCPv6 server. In this application scenario, the address request device PC and the first relay device BRAS 1 negotiate an interface identifier, the address request device PC and the first relay device BRAS 1 are located on a same link, and the second relay device BRAS 2 and the address request device PC may be located on different links.

After generating the request packet, the address request device may directly add the interface identifier to the request packet. Specifically, the request packet generated by the address request device is a DHCPv6 solicit packet, an option (Option) field is added to the DHCPv6 solicit packet, and the interface identifier is added to the option field. Further, the option field may be added to OPTION_IA_NA (3) of the DHCPv6 solicit packet. The option field may be represented in an option type format, and includes Option-code (code), Option-len (length), and data (data). The Option-code is used to indicate a code type (interface identifier) of the option field, the Option-len is used to indicate a length (for example, 8 bytes) of the data (data), and the data (data) is used to carry a specific interface identifier, as shown in FIG. 3a. Alternatively, the option field may be defined by using type-length-value (type-length-value, TLV), where a type field is used to indicate an option type (interface identifier), a length field is used to indicate a quantity of bytes included in a "value" field, for example, 8 bytes (Byte), and the value field is used to indicate a negotiated interface identifier, as shown in FIG. 3b. The address request device may be a PPPoE device.

When a plurality of address request devices exist in the network system, the relay device or the address allocation device may identify the address request device by using a device unique identifier (device unique identifier, DUID). Specifically, each address request device corresponds to one DUID, to uniquely identify the address request device by using the DUID. In this case, the request packet may include the device unique identifier. For example, there are two address request devices in the network system: a PC 1 and a PC 2. A device unique identifier corresponding to the PC 1 is a DUID 1, and a device unique identifier corresponding to the PC 2 is a DUID 2. When the PC 1 sends a request packet to the address allocation device, the request packet includes the DUID 1, so that the address allocation device allocates an IPv6 address to the PC 1.

S202: The address request device sends the request packet to the relay device.

S203: The relay device forwards the request packet to the address allocation device.

After generating the request packet, the address request device may add an IP address corresponding to the relay device to a destination address field of the request packet, so that the relay device can receive the request packet. After receiving the request packet sent by the address request device, the relay device may encapsulate the request packet into a relay-forward (Relay-Forward) packet, and update a source address in the relay-forward packet to the address corresponding to the relay device. In addition, a destination address is updated to an IP address corresponding to the address allocation device, to forward the relay-forward packet to the address allocation device. The relay-forward packet includes the DUID of the address request device. When the request packet generated by the address request device is a DHCPv6 solicit packet, a relay-forward packet obtained by the relay forwarding device by encapsulating the request packet is a DHCPv6 solicit relay-forward packet.

When the method is applied to the scenario shown in FIG. 4, the address request device PC sends the request packet to the BRAS 1, and the BRAS 1 encapsulates the request packet to obtain a first relay-forward packet, and forwards the first relay-forward packet to the BRAS 2. After receiving the first relay-forward packet, the BRAS 2 re-encapsulates the first relay-forward packet to obtain a second relay-forward packet, and sends the second relay-forward packet to the address allocation device DHCPv6 server.

In a specific implementation, when the request packet received by the relay device does not include the interface identifier, the relay device may add the interface identifier to the request packet, so that the request packet sent to the address allocation device includes the interface identifier. Specifically, the relay device may add an option field to a relay-forward packet header, and carry the interface identifier by using the option field, to forward the relay-forward packet including the interface identifier. The option field may be defined in an option type format, and includes Option-code (code), Option-len (length), and data (data). The Option-code is used to indicate a code type (interface identifier) of the option field, the Option-len is used to indicate a length (for example, 8 bytes) of the data (data), and the data (data) is used to carry a specific interface identifier, as shown in FIG. 3a. Alternatively, the option field may be defined by using a type-length-value (type-length-value, TLV) format, where a type field is used to indicate an option type (interface identifier type), a length field is used to indicate a quantity of bytes included in a "value" field, for example, 8 bytes (Byte), and the value field is used to indicate a negotiated interface identifier, as shown in FIG. 3b. When the method is applied to the scenario shown in FIG. 4, because the address request device PC negotiates the interface identifier with the nearest relay device BRAS 1, when the request packet received by the BRAS 1 does not include the interface identifier, the BRAS 1 adds the interface identifier to the request packet.

It should be noted that, when a plurality of relay devices exist between the address request device and the address allocation device, after receiving the request packet, a relay device connected to the address request device forwards the request packet to a next-hop relay device, and then the next-hop relay device continues to forward the request packet, until the request packet is forwarded to the address allocation device.

To reflect transmission continuity of a packet (such as the request packet and the response packet mentioned above), in this embodiment of this application, both the request packet sent by the address request device to the relay device and the request packet forwarded by the relay device to the address allocation device are referred to as request packets. However, it may be understood that the request packet sent by the address request device to the relay device is different from the request packet sent by the relay device to the address allocation device in an actual application scenario. For example, information such as time to live (time to live, TTL) and a next-hop node may be different. To be specific, when the relay device forwards the request packet sent by the address request device to the address allocation device, the request packet may actually be an updated request packet in which some necessary information is modified.

S204: The address allocation device allocates the IPv6 address based on the interface identifier in the request packet.

After receiving the request packet, the address allocation device obtains the interface identifier by parsing the request packet, and determines the IPv6 address based on the interface identifier. Specifically, the address allocation device may select a prefix from a bound IPv6 address pool, and form the IPv6 address based on the prefix and the interface identifier, so that an address interface identifier in the allocated IPv6 address is the negotiated interface identifier.

S205: The address allocation device sends a response packet including the IPv6 address to the relay device.

After obtaining the IPv6 address, the address allocation device generates the response packet, and sends the response packet including the IPv6 address to the relay device. Specifically, the address allocation device generates a response message based on the IPv6 address, encapsulates the response message into a relay-reply packet, and forwards the relay-reply packet to the relay device. The response packet includes the DUID of the address request device, and a destination address corresponding to the response packet is the relay device.

S206: The relay device forwards the response packet to the address request device.

After receiving the response packet, the relay device forwards the response packet to the address request device, so that the address request device can obtain the IPv6 address, so as to access a network by using the IPv6 address. Specifically, after receiving the relay-reply packet sent by the address allocation device, the relay device parses the relay-reply packet to obtain the response message, and forwards the response message to the address request device.

In a specific implementation, the relay device may obtain the device unique identifier DUID by parsing the response packet, to determine a MAC address by using the DUID and a correspondence between the DUID and the MAC address. The MAC address is a MAC address corresponding to the address request device. The relay device sends the response packet to the address request device corresponding to the MAC address. The relay device may maintain a table of correspondences between DUIDs and MAC addresses, to determine, by using the correspondence table, the MAC address corresponding to the address request device.

In a specific implementation, the address allocation device may be a DHCPv6 server, and the relay device is a DHCPv6 relay device. An address allocation protocol used by the address allocation device and the address request device is a DHCPv6 protocol.

In embodiments of this application, the negotiated interface identifier is sent to the address allocation device, so that when the address allocation device allocates the IPv6 address, the address interface identifier of the allocated IPv6 address is the negotiated interface identifier, to ensure that the address request device can successfully access the network.

Based on the foregoing method embodiments, an embodiment of this application provides an IP address allocation apparatus. The following provides description with reference to the accompanying drawings.

FIG. 5 is a structural diagram of an IP address allocation apparatus according to an embodiment of this application. An address allocation apparatus 500 may be applied to a relay device to perform functions of the relay device in the embodiment shown in FIG. 2. The apparatus 500 may include a receiving unit 501, a processing unit 502, and a sending unit 503.

The receiving unit 501 is configured to receive a request packet sent by an address request device, where the request packet is used to request an IPv6 address.

The processing unit 502 is configured to add an interface identifier to the request packet. For an implementation of the processing unit 502, refer to the detailed description of S203 in the embodiment shown in FIG. 2.

The sending unit 503 is configured to forward the request packet including the interface identifier to an address allocation device. For an implementation of the sending unit 503, refer to the detailed description of S203 in the embodiment shown in FIG. 2.

The receiving unit 501 is further configured to receive a response packet that is sent by the address allocation device and that includes the IPv6 address, where the IPv6 address includes the interface identifier. For an implementation of the receiving unit 501, refer to the detailed description of S205 in the embodiment shown in FIG. 2.

The sending unit 503 is further configured to forward the response packet to the address request device. For an implementation of the sending unit 503, refer to the detailed description of S206 in the embodiment shown in FIG. 2.

In a possible implementation, the processing unit 502 is specifically configured to encapsulate the request packet into a relay-forward packet, where the interface identifier is carried in the relay-forward packet; and the sending unit is specifically configured to forward the relay-forward packet including the interface identifier to the address allocation device.

For an implementation of the processing unit 502, refer to the detailed description of S203 in the embodiment shown in FIG. 2.

In a possible implementation, an address allocation protocol used by the address allocation device and the address request device is a dynamic host configuration protocol DHCPv6.

In a possible implementation, the relay-forward packet is a DHCPv6 solicit relay-forward packet, and the interface identifier is carried in a newly added option field of the DHCPv6 solicit relay-forward packet.

In a possible implementation, the address request device is a point-to-point protocol over Ethernet PPPoE device.

In a possible implementation, the address allocation device is a dynamic host configuration protocol DHCPv6 server, and the relay device is a DHCP relay device.

For specific executable functions and implementations of the apparatus 500, refer to corresponding descriptions of the relay device in the embodiment shown in FIG. 2. Details are not described herein again.

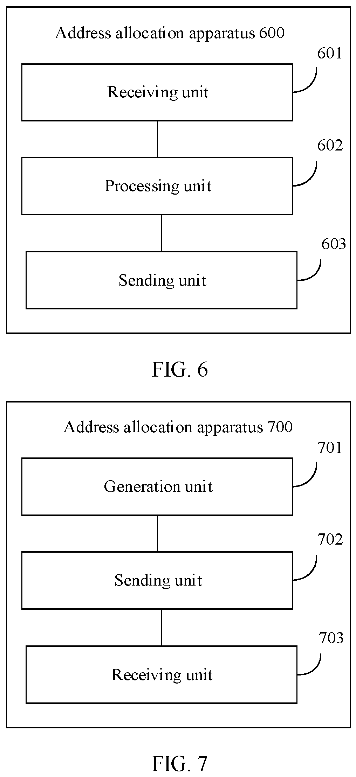

FIG. 6 is a structural diagram of another IP address allocation apparatus according to an embodiment of this application. An address allocation apparatus 600 may be applied to an address allocation device to perform functions of the address allocation device in the embodiment shown in FIG. 2. The apparatus 600 may include a receiving unit 601, a processing unit 602, and a sending unit 603.

The receiving unit 601 is configured to receive a request packet forwarded by a relay device, where the request packet includes an interface identifier, and the request packet is used to request an IPv6 address. For an implementation of the receiving unit 601, refer to the detailed description of S203 in the embodiment shown in FIG. 2.

The processing unit 602 is configured to allocate the IPv6 address based on the interface identifier. For an implementation of the processing unit 602, refer to the detailed description of S204 in the embodiment shown in FIG. 2.

The sending unit 603 is configured to send a response packet including the IPv6 address to an address request device, where the IPv6 address includes the interface identifier. For an implementation of the sending unit 603, refer to the detailed description of S205 and S206 in the embodiment shown in FIG. 2.

The interface identifier is obtained by the address request device and the relay device through negotiation, and the relay device is located between the address request device and a network device to which the apparatus 600 is applied.

In a possible implementation, the interface identifier is added to the request packet by the address request device. For an implementation of adding the interface identifier by the address request device, refer to the detailed description of S201 in the embodiment shown in FIG. 2.

In a possible implementation, the interface identifier is added to the request packet by the relay device. For an implementation of adding the interface identifier by the relay device, refer to the detailed description of S203 in the embodiment shown in FIG. 2.

In a possible implementation, the interface identifier is carried in a newly added option field of the request packet. For an interface identifier carrying format, refer to FIG. 3a and FIG. 3b.

In a possible implementation, the processing unit 602 is specifically configured to: obtain an address prefix, and generate the IPv6 address based on the address prefix and the interface identifier. For a specific implementation of the processing unit 602, refer to the detailed description of S204 in the embodiment shown in FIG. 2.

For specific executable functions and implementations of the apparatus 600, refer to corresponding descriptions of the address allocation device in the embodiment shown in FIG. 2. Details are not described herein again.

FIG. 7 is a structural diagram of another IP address allocation apparatus according to an embodiment of this application. As shown in FIG. 7, an address allocation apparatus 700 may be applied to an address request device to perform functions of the address request device in the embodiment shown in FIG. 2. The apparatus 700 may include a generation unit 701, a sending unit 702, and a receiving unit 703.

The generation unit 701 is configured to generate a request packet, where the request packet includes an interface identifier, and the request packet is used to request an IPv6 address. For an implementation of the generation unit 701, refer to the detailed description of S201 in the embodiment shown in FIG. 2.

The sending unit 702 is configured to send the request packet to an address allocation device. For an implementation of the sending unit 702, refer to the detailed description of S202-S203 in the embodiment shown in FIG. 2.

The receiving unit 703 is configured to receive a response packet sent by the address allocation device, where the response packet includes the IPv6 address, and the IPv6 address includes the interface identifier. For an implementation of the receiving unit 703, refer to the detailed description of S205 and S206 in the embodiment shown in FIG. 2.

The interface identifier is obtained by a network device to which the apparatus 700 is applied and a relay device through negotiation, and the relay device is located between the network device to which the apparatus 700 is applied and the address allocation device.

In a possible implementation, the receiving unit 703 is specifically configured to receive the response packet forwarded by the relay device. For an implementation of the receiving unit 703, refer to the detailed description of S206 in the embodiment shown in FIG. 2.

In a possible implementation, the request packet is a DHCPv6 solicit packet, and the interface identifier is carried in a newly added option field of the DHCPv6 solicit packet.

For specific executable functions and implementations of the apparatus 700, refer to corresponding descriptions of the address request device in the embodiment shown in FIG. 2. Details are not described herein again.

An embodiment of this application provides a communication system. The system includes an address request device, a relay device, and an address allocation device. The address request device includes the address allocation apparatus 700, the relay device includes the address allocation apparatus 500, and the address allocation device includes the address allocation apparatus 600.

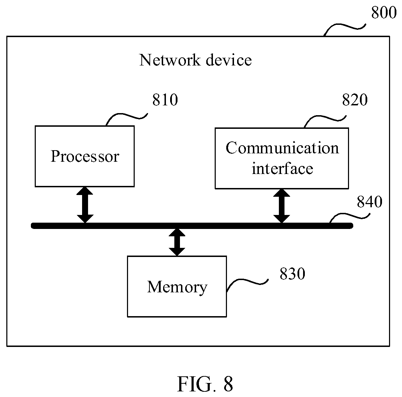

FIG. 8 is a schematic diagram of a structure of a communication device according to an embodiment of this application. The communication device may be implemented by the address request device, the relay device, and the address allocation device in the embodiment shown in FIG. 2, or the apparatus 500 in the embodiment shown in FIG. 5, the apparatus 600 in the embodiment shown in FIG. 6, and the apparatus 700 in the embodiment shown in FIG. 7.

As shown in FIG. 8, a communication device 800 includes at least a processor 810. The communication device 800 may further include a communication interface 820 and a memory 830. There may be one or more processors 810 in the communication device 800, and one processor is used as an example in FIG. 8. In this embodiment of this application, the processor 810, the communication interface 820, and the memory 830 may be connected by using a bus system or in another manner. In FIG. 8, a bus system 840 is used for connection.

The processor 810 may be a CPU, an NP, or a combination of a CPU and an NP. The processor 810 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

When the communication device is a relay device, the processor 810 may perform a related function such as adding an interface identifier to a request packet in the foregoing method embodiment. When the communication device is an address allocation device, the processor 810 may perform a related function such as allocating an IPv6 address based on an interface identifier in the foregoing method embodiment. When the communication device is an address request device, the processor may perform a related function such as generating a request packet in the foregoing method embodiment.

The communication interface 820 is configured to receive and send a packet. Specifically, the communication interface 820 may include a receiving interface and a sending interface. The receiving interface may be configured to receive a packet, and the sending interface may be configured to send a packet. There may be one or more communication interfaces 820.

The memory 830 may include a volatile memory (English: volatile memory), for example, a random access memory (random access memory, RAM). Alternatively, the memory 830 may include a non-volatile memory (English: non-volatile memory), for example, a flash memory (English: flash memory), a hard disk drive (hard disk drive, HDD), or a solid-state drive (solid-state drive, SSD). Alternatively, the memory 830 may include a combination of the foregoing types of memories.

Optionally, the memory 830 stores an operating system, a program, an executable module or a data structure, a subset thereof, or an extended set thereof. The program may include various operation instructions to implement various operations. The operating system may include various system programs, to implement various basic services and process hardware-based tasks. The processor 810 reads the program in the memory 830, to implement the IP address allocation method provided in embodiments of this application.

The memory 830 may be a storage device in the communication device 800, or may be a storage apparatus independent of the communication device 800.

The bus system 840 may be a peripheral component interconnect (peripheral component interconnect, PCI) bus, an extended industry standard architecture (extended industry standard architecture, EISA) bus, or the like. The bus system 840 may be classified as an address bus, a data bus, a control bus, or the like. For ease of representation, only one thick line is used to represent the bus in FIG. 8, but this does not indicate that there is only one bus or only one type of bus.

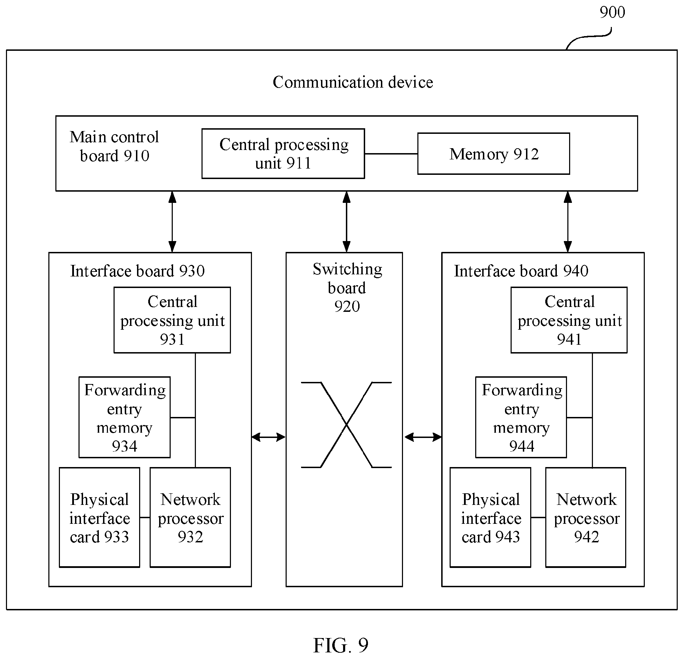

FIG. 9 is a schematic diagram of a structure of another communication device 900 according to an embodiment of this application. The communication device 900 may be configured as the address request device, the relay device, and the address allocation device in the foregoing embodiment, or the apparatus 500 in the embodiment shown in FIG. 5, the apparatus 600 in the embodiment shown in FIG. 6, and the apparatus 700 in the embodiment shown in FIG. 7 for implementation.

The communication device 900 includes a main control board 910 and an interface board 930.

The main control board 910 is also referred to as a main processing unit (main processing unit, MPU) or a route processor card (route processor card). The main control board 910 controls and manages each component in the network device 900, including route computation, device management, and function maintenance. The main control board 910 includes a central processing unit 911 and a memory 912.

The interface board 930 is also referred to as a line processing unit (line processing unit, LPU), a line card (line card), or a service board. The interface board 930 is configured to provide various service interfaces and implement data packet forwarding. The service interfaces include but are not limited to an Ethernet interface, a POS (Packet over SONET/SDH) interface, and the like. The Ethernet interface is, for example, a flexible Ethernet client (Flexible Ethernet Clients, FlexE Clients). The interface board 930 includes: a central processing unit 931, a network processor 932, a forwarding entry memory 934, and a physical interface card (physical interface card, PIC) 933.

The central processing unit 931 on the interface board 930 is configured to control and manage the interface board 930, and communicate with the central processing unit 911 on the main control board 910.

The network processor 932 is configured to implement packet forwarding processing. A form of the network processor 932 may be a forwarding chip. Specifically, processing of an uplink packet includes processing of an inbound interface of the packet, and searching for a forwarding table; and processing of a downlink packet includes searching for a forwarding table, or the like.

The physical interface card 933 is configured to implement a physical layer interconnection function, so that original traffic enters the interface board 930 from the physical interface card, and a processed packet is sent out from the physical interface card 933. The physical interface card 933 includes at least one physical interface, the physical interface is also referred to as a physical port, and the physical interface card 933 corresponds to a FlexE physical interface 204 in a system architecture 200. The physical interface card 933 is also referred to as a subcard, and may be installed on the interface board 930, and is responsible for converting an optical or electrical signal into a packet, checking validity of the packet, and forwarding the packet to the network processor 932 for processing. In some embodiments, the central processing unit 931 of the interface board 903 may also execute a function of the network processor 932, for example, implement software forwarding based on a general-purpose CPU. Therefore, the network processor 932 is not required in the physical interface card 933.

Optionally, the communication device 900 includes a plurality of interface boards. For example, the communication device 900 further includes an interface board 940. The interface board 940 includes a central processing unit 941, a network processor 942, a forwarding entry memory 944, and a physical interface card 943.

Optionally, the communication device 900 further includes a switching board 920. The switching board 920 may also be referred to as a switch fabric unit (switch fabric unit, SFU). When the network device has a plurality of interface boards 930, the switching board 920 is configured to complete data exchange between the interface boards. For example, the interface board 930 and the interface board 940 may communicate with each other through the switching board 920.

The main control board 910 and the interface board 930 are coupled. For example, the main control board 910, the interface board 930, the interface board 940, and the switching board 920 are connected to a system backboard by using a system bus for communication. In a possible implementation, an inter-process communication (inter-process communication, IPC) channel is established between the main control board 910 and the interface board 930, and the main control board 910 and the interface board 930 communicate with each other through the IPC channel.

Logically, the communication device 900 includes a control plane and a forwarding plane. The control plane includes the main control board 910 and the central processing unit 931, and the forwarding plane includes components that perform forwarding, for example, the forwarding entry memory 934, the physical interface card 933, and the network processor 932. The control plane performs functions such as a router, generating a forwarding table, processing signaling and protocol packets, and configuring and maintaining a device status. The control plane delivers the generated forwarding table to the forwarding plane. On the forwarding plane, the network processor 932 searches a table based on the forwarding table delivered by the control plane, to forward a packet received by the physical interface card 933. The forwarding table delivered by the control plane may be stored in the forwarding entry memory 934. In some embodiments, the control plane and the forwarding plane may be totally separated, and are not on a same device.

It should be understood that the sending unit and the receiving unit in each embodiment in FIG. 5 to FIG. 7 may be different physical interface cards. For example, the receiving unit 501 is equivalent to the physical interface card 933, and the sending unit 503 is equivalent to the physical interface card 934. The processing unit 502 in the apparatus 500, the processing unit 602 in the apparatus 600, the generation unit 701 in the apparatus 700, and the like may be equivalent to one or more of the central processing unit 911, the central processing unit 931, and the central processing unit 941 in the communication device 900.

It should be understood that an operation on the interface board 940 is consistent with an operation on the interface board 930 in this embodiment of this application. For brevity, details are not described again. It should be understood that the communication device 900 in this embodiment may correspond to the first network device or the second network device in the foregoing method embodiments. The main control board 910, the interface board 930, and/or the interface board 940 in the communication device 900 may implement functions of the first network device or the second network device and/or various steps implemented by the first network device or the second network device in the foregoing method embodiments. For brevity, details are not described herein again.

It should be understood that there may be one or more main control boards, and when there is a plurality of main control boards, the main control boards may include a primary main control board and a secondary main control board. There may be one or more interface boards. A network device with a stronger data processing capability provides more interface boards. There may also be one or more physical interface cards on the interface board. There may be no switching board, or there may be one or more switching boards. When there is a plurality of switching boards, load sharing and redundancy backup may be jointly implemented by the plurality of switching boards. In a centralized forwarding architecture, the network device may not need the switching board, and the interface board provides a function of processing service data in an entire system. In a distributed forwarding architecture, the network device may have at least one switching board, and data exchange between a plurality of interface boards is implemented by using the switching board, to provide a large-capacity data exchange and processing capability. Therefore, a data access and processing capability of the network device in the distributed architecture is better than that of the device in the centralized architecture. Optionally, the network device may alternatively be in a form in which there is only one card. To be specific, there is no switching board, and functions of the interface board and the main control board are integrated on the card. In this case, the central processing unit on the interface board and the central processing unit on the main control board may be combined into one central processing unit on the card, to perform functions obtained after the two central processing units are combined. The device in this form (for example, a network device such as a low-end switch or router) has a relatively weak data exchange and processing capability. Which architecture is specifically used depends on a specific networking deployment scenario.

In some possible embodiments, the address request device, the relay device, or the address allocation device may be implemented as a virtualization device. For example, the virtualization device may be a virtual machine (English: Virtual Machine, VM) running a program that has a function of sending a packet, and the virtual machine is deployed on a hardware device (for example, a physical server). The virtual machine is a complete computer system that is simulated by software and has complete hardware system functions and runs in a completely isolated environment. The virtual machine may be configured as an address request device, a relay device, or an address allocation device. For example, the address request device, the relay device, or the address allocation device may be implemented based on a general-purpose physical server in combination with a network functions virtualization (Network Functions Virtualization, NFV) technology. The address request device, the relay device, or the address allocation device is a virtual host, a virtual router, or a virtual switch. A person skilled in the art may virtualize, on the general-purpose physical server by reading this application with reference to the NFV technology, the address request device, the relay device, or the address allocation device that has the foregoing functions. Details are not described herein again.

It should be understood that the network devices in the foregoing product forms have any function of the address request device, the relay device, or the address allocation device in the foregoing method embodiments. Details are not described herein again.

An embodiment of this application further provides a chip, including a processor and an interface circuit. The interface circuit is configured to receive instructions and transmit the instructions to the processor. The processor, for example, may be a specific implementation form of the apparatus 700 shown in FIG. 7, and may be configured to perform the foregoing packet transmission method. The processor is coupled to a memory, the memory is configured to store a program or instructions, and when the program or the instructions is/are executed by the processor, the chip system is enabled to implement the method in any one of the foregoing method embodiments.

Optionally, there may be one or more processors in the chip system. The processor may be implemented by hardware or software. When being implemented by hardware, the processor may be a logic circuit, an integrated circuit, or the like. When being implemented by software, the processor may be a general-purpose processor, and is implemented by reading software code stored in the memory.

Optionally, there may be one or more memories in the chip system. The memory may be integrated with the processor, or may be disposed separately from the processor. This is not limited in this application. For example, the memory may be a non-transitory processor, for example, a read-only memory ROM. The memory and the processor may be integrated on a same chip, or may be separately disposed on different chips. A type of the memory and a manner of setting the memory and the processor are not specifically limited in this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), or a programmable logic device (programmable logic device, PLD) or another integrated chip.

An embodiment of this application further provides a computer-readable storage medium, including instructions or a computer program. When the instructions or the computer program are/is run on a computer, the computer is enabled to perform the IP address allocation method provided in the foregoing embodiments.

An embodiment of this application further provides a computer program product that includes instructions or a computer program. When the computer program product runs on a computer, the computer is enabled to perform the IP address allocation method provided in the foregoing embodiments.

In the specification, claims, and accompanying drawings of this application, the terms "first", "second", "third", "fourth", and the like (if existent) are intended to distinguish between similar objects but do not necessarily indicate a specific order or sequence. It should be understood that the data termed in such a way is interchangeable in an appropriate circumstance, so that the embodiments described herein can be implemented in another order than the order illustrated or described herein. Moreover, the terms "include", "have" and any other variants mean to cover the non-exclusive inclusion, for example, a process, method, system, product, or device that includes a list of steps or units is not necessarily limited to those steps or units, but may include other steps or units not expressly listed or inherent to such a process, method, product, or device.

It may be clearly understood by a person skilled in the art that, for convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical service division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one position, or may be distributed on a plurality of network units. Some or all of the units may be selected based on an actual requirement to achieve objectives of the solutions of embodiments.

In addition, service units in embodiments of this application may be integrated into one processing unit, or each of the units may exist alone physically, or two or more units may be integrated into one unit. The integrated unit may be implemented in a form of hardware, or may be implemented in a form of a software service unit.

When the integrated unit is implemented in the form of a software service unit and sold or used as an independent product, the integrated unit may be stored in a computer-readable storage medium. Based on such an understanding, the technical solutions of this application essentially, or the part contributing to the conventional technology, or some or all of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

A person skilled in the art should be aware that, in one or more of the foregoing examples, the service described in the present invention may be implemented by hardware, software, firmware, or any combination thereof. When software is used for implementation, the services may be stored in a computer-readable medium or transmitted as one or more instructions or code on the computer-readable medium. The computer-readable medium includes a computer storage medium and a communication medium. The communication medium includes any medium that enables a computer program to be transmitted from one place to another. The storage medium may be any available medium that can be accessed by a general-purpose or dedicated computer.

The objectives, technical solutions, and benefits of the present invention are further described in detail in the foregoing specific implementations. It should be understood that the foregoing descriptions are merely specific implementations of the present invention.

The foregoing embodiments are merely intended for describing the technical solutions of this application, but not for limiting this application.

## Claims

1. An IP address allocation method, wherein the method comprises:
receiving, by a relay device, a request packet sent by an address request device, wherein the request packet is used to request an IPv6 address;
adding, by the relay device, an interface identifier to the request packet, forwarding (S203) the request packet comprising the interface identifier to an address allocation device, and receiving, by the relay device, a response packet that is sent by the address allocation device;
the method **characterised in that**:
the response packet comprises the IPv6 address, wherein the IPv6 address comprises the interface identifier; and
the method further comprises: before the receiving, by the relay device, the request packet, the relay device negotiates the interface identifier with the address request device; and
forwarding, by the relay device, the response packet to the address request device.

2. The method according to claim 1, wherein the adding, by the relay device, an interface identifier to the request packet, and forwarding (S203) the request packet comprising the interface identifier to an address allocation device comprises:
encapsulating, by the relay device, the request packet into a relay-forward packet, wherein the interface identifier is carried in the relay-forward packet; and
forwarding, by the relay device, the relay-forward packet comprising the interface identifier to the address allocation device.

3. The method according to claim 1 or 2, wherein an address allocation protocol used by the address allocation device and the address request device is a dynamic host configuration protocol version 6, DHCPv6.

4. The method according to claim 3, wherein the relay-forward packet is a DHCPv6 solicit relay-forward packet, and the interface identifier is carried in a newly added option field of the DHCPv6 solicit relay-forward packet.

5. The method according to any one of claims 1 to 4, wherein the address request device is a point-to-point protocol over Ethernet PPPoE device.

6. The method according to any one of claims 1 to 5, wherein the address allocation device is a dynamic host configuration protocol DHCPv6 server, and the relay device is a DHCP relay device.

7. An IP address allocation method, wherein the method comprises:
receiving, by an address allocation device, a request packet forwarded by a relay device, wherein the request packet comprises an interface identifier, and the request packet is used to request an IPv6 address; and
allocating (S204), by the address allocation device, the IPv6 address based on the interface identifier, and sending (S205) a response packet to an address request device,
the method **characterised in that**:
the response packet comprises the IPv6 address;
the IPv6 address comprises the interface identifier; and
the method further comprises: before the receiving, by the address allocation device, the request packet, the relay device negotiates the interface identifier with the address request device.

8. The method according to claim 7, wherein the allocating (S204), by the address allocation device, the IPv6 address based on the interface identifier comprises:
obtaining, by the address allocation device, an address prefix; and
generating, by the address allocation device, the IPv6 address based on the address prefix and the interface identifier.

9. An IP address allocation method, wherein the method comprises:
generating (S201), by an address request device, a request packet, wherein the request packet comprises an interface identifier, and the request packet is used to request an IPv6 address;
sending (S202), by the address request device, the request packet to an address allocation device; and
receiving, by the address request device, a response packet sent by the address allocation device;
wherein
the response packet comprises the IPv6 address, the IPv6 address comprises the interface identifier; and
the method further comprises, before the generating, by the address request device, the request packet, the address request device negotiating the interface identifier with a relay device located between the address request device and the address allocation device.

10. The method according to claim 9, wherein the receiving, by the address request device, a response packet sent by the address allocation device comprises:
receiving, by the address request device, the response packet forwarded by the relay device.

11. The method according to claim 9 or claim 10, wherein the request packet is a DHCPv6 solicit packet, and the interface identifier is carried in a newly added option field of the DHCPv6 solicit packet.

12. A communication device (900), wherein the communication device (900) comprises a processor (911) and a memory (912);
the memory (912) is configured to store instructions; and
the processor (911) is configured to execute the instructions in the memory (912), so that the communication device (900) is enabled to perform the method according to any one of claims 1 to 6 or 9 to 11.

13. A communication system comprising an address request device, a relay device, and an address allocation device (500, 600, 700), the system configured to perform the method of claim 7 or claim 8.

14. A computer-readable storage medium, comprising instructions, wherein when the instructions are run on a computer, the computer is enabled to perform the method according to any one of claims 1 to 6 or 9 to 11.

15. A computer-readable storage medium, comprising instructions, wherein when the instructions are run on a system comprising an address request device, a relay device and an address allocation device (500, 600, 700), the system is enabled to perform the method according to claim 7 or claim 8.

## Patentansprüche

1. IP-Adressenzuweisungsverfahren, wobei das Verfahren Folgendes umfasst:
Empfangen eines von einer Adressenanforderungsvorrichtung gesendeten Anforderungspakets durch eine Relaisvorrichtung, wobei das Anforderungspaket zum Anfordern einer IPv6-Adresse verwendet wird;
Hinzufügen einer Schnittstellenkennung zum Anforderungspaket durch die Relaisvorrichtung, Weiterleiten (S203) des Anforderungspakets umfassend die Schnittstellenkennung an eine Adressenzuweisungsvorrichtung und Empfangen eines von der Adressenzuweisungsvorrichtung gesendeten Antwortpakets durch die Relaisvorrichtung;
wobei das Verfahren **dadurch gekennzeichnet ist, dass**:
das Antwortpaket die IPv6-Adresse umfasst, wobei die IPv6-Adresse die Schnittstellenkennung umfasst; und
das Verfahren ferner Folgendes umfasst: vor dem Empfangen des Anforderungspakets durch die Relaisvorrichtung, Aushandeln der Schnittstellenkennung mit der Adressenanforderungsvorrichtung durch die Relaisvorrichtung; und
Weiterleiten des Antwortpakets durch die Relaisvorrichtung an die Adressenanforderungsvorrichtung.

2. Verfahren nach Anspruch 1, wobei das Hinzufügen einer Schnittstellenkennung zum Anforderungspaket durch die Relaisvorrichtung und das Weiterleiten (S203) des Anforderungspakets umfassend die Schnittstellenkennung an eine Adressenzuweisungsvorrichtung Folgendes umfasst:
Einkapseln des Anforderungspakets durch die Relaisvorrichtung in ein Relais-Weiterleitungspaket, wobei die Schnittstellenkennung im Relais-Weiterleitungspaket enthalten ist; und
Weiterleiten des Relais-Weiterleitungspakets umfassend die Schnittstellenkennung durch die Relaisvorrichtung an die Adressenzuweisungsvorrichtung.

3. Verfahren nach Anspruch 1 oder 2, wobei ein von der Adressenzuweisungsvorrichtung und der Adressenanforderungsvorrichtung verwendetes Adressenzuweisungsprotokoll ein dynamisches Hostkonfigurationsprotokoll Version 6 (DHCPv6) ist.

4. Verfahren nach Anspruch 3, wobei das Relais-Weiterleitungspaket ein DHCPv6-Solicit-Relais-Weiterleitungspaket ist und die Schnittstellenkennung in einem neu hinzugefügten Optionsfeld des DHCPv6-Solicit-Relais-Weiterleitungspakets übertragen wird.

5. Verfahren nach einem der Ansprüche 1 bis 4, wobei die Adressenanforderungsvorrichtung eine Punkt-zu-Punkt-Protokoll-über-Ethernet (PPPoE - Point-to-Point Protocol over Ethernet)-Vorrichtung ist.

6. Verfahren nach einem der Ansprüche 1 bis 5, wobei die Adressenzuweisungsvorrichtung ein DHCPv6-Server mit dynamischem Hostkonfigurationsprotokoll und die Relaisvorrichtung eine DHCP-Relaisvorrichtung ist.

7. IP-Adressenzuweisungsverfahren, wobei das Verfahren Folgendes umfasst:
Empfangen eines von einer Relaisvorrichtung weitergeleiteten Anforderungspakets durch eine Adressenzuweisungsvorrichtung, wobei das Anforderungspaket eine Schnittstellenkennung umfasst und zum Anfordern einer IPv6-Adresse verwendet wird; und
Zuweisen (S204) der IPv6-Adresse durch die Adressenzuweisungsvorrichtung auf Grundlage der Schnittstellenkennung und Senden (S205) eines Antwortpakets an eine Adressenanforderungsvorrichtung,
wobei das Verfahren **dadurch gekennzeichnet ist, dass**:
das Antwortpaket die IPv6-Adresse umfasst;
die IPv6-Adresse die Schnittstellenkennung umfasst; und
das Verfahren ferner Folgendes umfasst: vor dem Empfangen des Anforderungspakets durch die Adresszuweisungsvorrichtung, Aushandeln der Schnittstellenkennung mit der Adressenanforderungsvorrichtung durch die Relaisvorrichtung.

8. Verfahren nach Anspruch 7, wobei das Zuweisen (S204) der IPv6-Adresse durch die Adressenzuweisungsvorrichtung auf Grundlage der Schnittstellenkennung Folgendes umfasst:
Erlangen eines Adresspräfixes durch die Adressenzuweisungsvorrichtung; und
Generieren der IPv6-Adresse durch die Adressenzuweisungsvorrichtung auf Grundlage des Adresspräfixes und der Schnittstellenkennung.

9. IP-Adressenzuweisungsverfahren, wobei das Verfahren Folgendes umfasst:
Generieren (S201) eines Anforderungspakets durch eine Adressenanforderungsvorrichtung, wobei das Anforderungspaket eine Schnittstellenkennung umfasst und zum Anfordern einer IPv6-Adresse verwendet wird;
Senden (S202) des Anforderungspakets durch die Adressenanforderungsvorrichtung an eine Adressenzuweisungsvorrichtung; und
Empfangen eines von der Adressenzuweisungsvorrichtung gesendeten Antwortpakets durch die Adressenanforderungsvorrichtung;
wobei das Antwortpaket die IPv6-Adresse umfasst, die IPv6-Adresse die Schnittstellenkennung umfasst, und
das Verfahren ferner Folgendes umfasst: vor dem Generieren des Anforderungspakets durch die Adressenanforderungsvorrichtung, Aushandeln der Schnittstellenkennung mit einer Relaisvorrichtung, die sich zwischen der Adressenanforderungsvorrichtung und der Adressenzuweisungsvorrichtung befindet.

10. Verfahren nach Anspruch 9, wobei das Empfangen eines von der Adressenzuweisungsvorrichtung gesendeten Antwortpakets durch die Adressenanforderungsvorrichtung Folgendes umfasst:
Empfangen des von der Relaisvorrichtung weitergeleiteten Antwortpakets durch die Adressenanforderungsvorrichtung.

11. Verfahren nach Anspruch 9 oder Anspruch 10, wobei das Anforderungspaket ein DHCPv6-Solicit-Paket ist und die Schnittstellenkennung in einem neu hinzugefügten Optionsfeld des DHCPv6-Solicit-Pakets übertragen wird.

12. Kommunikationsvorrichtung (900), wobei die Kommunikationsvorrichtung (900) einen Prozessor (911) und einen Speicher (912) umfasst;
der Speicher (912) zum Speichern von Anweisungen konfiguriert ist; und
der Prozessor (911) dazu konfiguriert ist, die Anweisungen in dem Speicher (912) auszuführen, sodass die Kommunikationsvorrichtung (900) in die Lage versetzt wird, das Verfahren nach einem der Ansprüche 1 bis 6 oder 9 bis 1 durchzuführen.

13. Kommunikationssystem, das eine Adressenanforderungsvorrichtung, eine Relaisvorrichtung und eine Adressenzuweisungsvorrichtung umfasst (500, 600, 700), wobei das System dazu konfiguriert ist, das Verfahren nach Anspruch 7 oder Anspruch 8 auszuführen.

14. Computerlesbares Speichermedium, umfassend Anweisungen, wobei, wenn die Anweisungen auf einem Computer ausgeführt werden, der Computer in die Lage versetzt wird, das Verfahren nach einem der Ansprüche 1 bis 6 oder 9 bis 11 durchzuführen.

15. Computerlesbares Speichermedium, umfassend Anweisungen, wobei, wenn die Anweisungen auf einem System ausgeführt werden, das eine Adressenanforderungsvorrichtung, eine Relaisvorrichtung und eine Adressenzuweisungsvorrichtung (500, 600, 700) umfasst, das System in die Lage versetzt wird, das Verfahren nach Anspruch 7 oder Anspruch 8 auszuführen.

## Revendications

1. Procédé d'attribution d'adresses IP, dans lequel le procédé comprend :
la réception, par un dispositif relais, d'un paquet de requête envoyé par un dispositif de requête d'adresse, dans lequel le paquet de requête est utilisé pour demander une adresse IPv6 ;
l'ajout, par le dispositif relais, d'un identifiant d'interface au paquet de requête, la transmission (S203) du paquet de requête comprenant l'identifiant d'interface à un dispositif d'attribution d'adresses, et la réception, par le dispositif relais, d'un paquet de réponse qui est envoyé par le dispositif d'attribution d'adresses ;
le procédé étant **caractérisé en ce que** :
le paquet de réponse comprend l'adresse IPv6, l'adresse IPv6 comprenant l'identifiant d'interface ; et
le procédé comprend également : avant la réception, par le dispositif relais, du paquet de requête, le dispositif relais négocie l'identifiant d'interface avec le dispositif de requête d'adresse ; et
la transmission, par le dispositif relais, du paquet de réponse au dispositif de requête d'adresse.

2. Procédé selon la revendication 1, dans lequel l'ajout, par le dispositif relais, d'un identifiant d'interface au paquet de requête, et la transmission (S203) du paquet de requête comprenant l'identifiant d'interface à un dispositif d'attribution d'adresses comprennent :
l'encapsulation, par le dispositif relais, du paquet de requête dans un paquet de relais, dans lequel l'identifiant d'interface est transporté dans le paquet de relais ; et
la transmission, par le dispositif relais, du paquet de transmission relais comprenant l'identifiant d'interface au dispositif d'attribution d'adresse.

3. Procédé selon la revendication 1 ou 2, dans lequel un protocole d'attribution d'adresses utilisé par le dispositif d'attribution d'adresses et le dispositif de requête d'adresse est un protocole de configuration d'hôte dynamique version 6, DHCPv6.

4. Procédé selon la revendication 3, dans lequel le paquet de relais est un paquet de relais de sollicitation DHCPv6, et l'identifiant d'interface est transporté dans un champ d'option nouvellement ajouté du paquet de relais de sollicitation DHCPv6.

5. Procédé selon l'une quelconque des revendications 1 à 4, dans lequel le dispositif de requête d'adresse est un dispositif à protocole point à point sur Ethernet, PPPoE.

6. Procédé selon l'une quelconque des revendications 1 à 5, dans lequel le dispositif d'attribution d'adresse est un serveur de protocole de configuration d'hôte dynamique DHCPv6, et le dispositif relais est un dispositif relais DHCP.

7. Procédé d'attribution d'adresses IP, dans lequel le procédé comprend :
la réception, par un dispositif d'attribution d'adresses, d'un paquet de requête transmis par un dispositif relais, dans lequel le paquet de requête comprend un identifiant d'interface, et le paquet de requête est utilisé pour demander une adresse IPv6 ; et
l'attribution (S204), par le dispositif d'attribution d'adresse, de l'adresse IPv6 sur la base de l'identifiant d'interface, et l'envoi (S205) d'un paquet de réponse à un dispositif de requête d'adresse,
le procédé étant **caractérisé en ce que** :
le paquet de réponse comprend l'adresse IPv6 ;
l'adresse IPv6 comprend l'identifiant de l'interface ; et
le procédé comprend également : avant la réception, par le dispositif d'attribution d'adresses, du paquet de requête, le dispositif relais négocie l'identifiant d'interface avec le dispositif de requête d'adresse.

8. Procédé selon la revendication 7, dans lequel l'attribution (S204), par le dispositif d'attribution d'adresse, de l'adresse IPv6 sur la base de l'identifiant d'interface comprend :
l'obtention, par le dispositif d'attribution d'adresses, d'un préfixe d'adresse ; et
la génération, par le dispositif d'attribution d'adresses, de l'adresse IPv6 sur la base du préfixe d'adresse et de l'identifiant d'interface.

9. Procédé d'attribution d'adresses IP, dans lequel le procédé comprend :
la génération (S201), par un dispositif de requête d'adresse, d'un paquet de requête, dans lequel le paquet de requête comprend un identifiant d'interface, et le paquet de requête est utilisé pour demander une adresse IPv6 ;
l'envoi (S202), par le dispositif de requête d'adresse, du paquet de requête à un dispositif d'attribution d'adresses ; et
la réception, par le dispositif de requête d'adresse, d'un paquet de réponse envoyé par le dispositif d'attribution d'adresses ;
dans lequel le paquet de réponse comprend l'adresse IPv6, l'adresse IPv6 comprend l'identifiant d'interface ; et
le procédé comprend également, avant la génération, par le dispositif de requête d'adresse, du paquet de requête, la négociation par le dispositif de requête d'adresse de l'identifiant d'interface avec un dispositif relais situé entre le dispositif de requête d'adresse et le dispositif d'attribution d'adresse.

10. Procédé selon la revendication 9, dans lequel la réception, par le dispositif de requête d'adresse, d'un paquet de réponse envoyé par le dispositif d'attribution d'adresse comprend :
la réception, par le dispositif de requête d'adresse, du paquet de réponse transmis par le dispositif relais.

11. Procédé selon la revendication 9 ou la revendication 10, dans lequel le paquet de requête est un paquet de sollicitation DHCPv6, et l'identifiant d'interface est transporté dans un champ d'option nouvellement ajouté du paquet de sollicitation DHCPv6.

12. Dispositif de communication (900), dans lequel le dispositif de communication (900) comprend un processeur (911) et une mémoire (912) ;
la mémoire (912) est configurée pour stocker des instructions ; et
le processeur (911) est configuré pour exécuter les instructions dans la mémoire (912), de sorte que le dispositif de communication (900) est activé pour réaliser le procédé selon l'une quelconque des revendications 1 à 6 ou de 9 à 1.

13. Système de communication comprenant un dispositif de requête d'adresse, un dispositif relais, et un dispositif d'attribution d'adresse (500, 600, 700), le système étant configuré pour exécuter le procédé selon la revendication 7 ou la revendication 8.

14. Support de stockage lisible par ordinateur, comprenant des instructions, dans lequel, lorsque les instructions sont mises en œuvre sur un ordinateur, l'ordinateur est activé pour réaliser le procédé selon l'une quelconque des revendications 1 à 6 ou 9 à 11.

15. Support de stockage lisible par ordinateur, comprenant des instructions, dans lequel lorsque les instructions sont mises en œuvre sur un système comprenant un dispositif de requête d'adresse, un dispositif relais et un dispositif d'attribution d'adresse (500, 600, 700), le système est activé pour réaliser le procédé selon la revendication 7 ou la revendication 8.
